(19) Europäisches Patentamt / European Patent Office / Office européen des brevets

(11) **EP 3 929 671 A1**

(12) **EUROPEAN PATENT APPLICATION**

(43) Date of publication:
**29.12.2021 Bulletin 2021/52**

(51) Int Cl.:
**G05B 15/02** (2006.01)　　**G05B 13/02** (2006.01)
**G05B 17/02** (2006.01)　　**G05D 23/19** (2006.01)
**C03B 23/023** (2006.01)

(21) Application number: **20315324.2**

(22) Date of filing: **26.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SAINT-GOBAIN GLASS FRANCE**
**92400 Courbevoie (FR)**

(72) Inventors:
• **The inventors have waived their right to be thus mentioned.**

(74) Representative: **Saint-Gobain Recherche**
**B.P. 135**
**39, quai Lucien Lefranc**
**93303 Aubervilliers Cedex (FR)**

(54) **METHOD FOR ADJUSTING AT LEAST ONE PARAMETER OF GLASS FORMING FURNACE TO MANUFACTURE A GLASS ARTICLE**

(57) The invention pertains to computer implemented methods for adjusting at least one parameter of a glass forming furnace. More specifically, the invention relates to a method that allows to transfer parameters from a glass forming to another in order to manufacture, i.e. form, a given glass article, e.g. bended glass sheet. An outstanding advantage of the invention is that it allows to reproduce, transfer or duplicate a thermal treatment that is implemented in one furnace for forming of a given glass article, into another furnace for forming the same. It allows to reuse a set of adjusted parameters for a 'heating recipe' or 'heating program' that work in a first furnace to a second furnace while limiting, even eliminating, any human based heuristic approach, and related human errors.

Fig. 1

## Description

## Technical field

The invention pertains to computer implemented methods for adjusting at least one parameter of a glass forming furnace. More specifically, the invention relates to a method that allows to transfer parameters from a glass forming to another in order to manufacture, i.e. form, a given glass article, e.g. bended glass sheet.

In glass industry, glass forming processes traditionally encompass all mechanical forming processes that allow to provide a given shape and/or bend to a glass article. In particular, in automotive glass industry, bending and/or shaping operations are common in manufacturing of car windows, e.g. windshields, sidelites, backlites or canopees.

In glass forming process of flat glass articles, it is a common practice to carry out one or more thermal annealing or softening operations on glass articles before and during the forming stage. This thermal treatment is a critical step as it helps to release the internal residual stresses of glass articles and to get the working viscosity before to process further with the forming / moulding stage. In doing so, unexpected and/or unwanted breakage of the glass article upon forming is avoided.

For instance, in automotive glass industry, sheets of mineral glass are commonly shaped or curved through sag- or press-bending. In sag-bending, the glass is allowed to 'sag' to a pre-shaped mould under the effect of its own mass by gravity. In press-bending, the glass is pressed between male and female moulds. Press-bending is often used for complex shape. In both processes, the sheets of mineral glass are typically heated at temperatures above 600°C, usually around 620°C-640°c for sheets of soda-lime silica glass.

This thermal treatment has also an impact on the final optical quality of the glass articles. For example, for bended glass articles, such as laminated glass windshields, for which high optical quality is mandatory for sight applications, the thermal annealing has to be carried off carefully otherwise shifts of the optical centres and/or variations of refractive index may occur which would distort the vision.

In this context, glass furnaces used in glass forming processes are to be accurately configured to achieve the desired geometry and other properties of the glass article. Common glass forming furnaces are featured with more than one hundred of separate heating elements whose heating parameters have to be carefully adjusted in order to set up the right thermal conditions for forming. This adjustment is time-consuming as it is often done manually by a skilled operator that can be eventually assisted by computer implemented self-adjusting feedback methods.

A current shortcoming is that a working set of parameters found for a given furnace to manufacture, i.e. form, a given glass article cannot be used, or transferred, to setup another furnace to manufacture, i.e. form, the same glass article. As an illustrative example, supposing two glass forming processes A and B comprising each a furnace, the working set of parameters for the furnace of line A to manufacture a given glass article G cannot be directly used for the furnace of line B to manufacture the same glass article G. Instead, if one wants to manufacture the glass article G, an adjustment procedure of furnace of line B has to be carried out independently of the furnace of line A. In other words, reproducing a thermal treatment implemented in one furnace into another one is not a straightforward operation.

## Background art

It is a common practice to manually adjust the parameters of a furnace for the manufacturing of a given glass article. This adjustment procedure may possibly be assisted by computer implemented self-adjusting feedback methods. Nevertheless, in this practice, the adjusted parameters only work for a given furnace, and as a human based heuristic approach, i.e. trial-error approach, repeating this adjustment each time on any furnace to form a given glass article may become rapidly time-consuming, and may rely too much on the skills of few operators. Moreover, it is not devoid from human errors that may delay the start of production and/or make produced glass articles out of specifications.

Furthermore, the reuse, transfer or duplication, of a set of adjusted parameters that work for a given furnace for manufacturing a given glass article to another furnace for forming the same glass article is not a straightforward operation. For instance, even carried out by the most skilled operator, the 'tips and tricks' that work for a given furnace for manufacturing a given glass article, i.e. to obtain an optimized thermal treatment that suits the forming or shaping of said article, maybe ineffective for another furnace.

It is known in prior art, e.g. WO 2020002195 A1, CN 104843981 A, to use methods to monitor the thermal evolution or to automatically adjust the parameters of a glass forming furnace. However, these methods are ineffective for a reuse or a transfer a set of parameters that works for a given furnace for manufacturing a given glass article to another for manufacturing the same given article. More precisely, the prior art does not provide any information to reproduce a thermal treatment implemented in one furnace for forming a given glass article into another furnace for forming the same glass article.

## Summary of the invention

Technical problem

There is a need for a method that allows to reproduce, transfer or duplicate efficiently a thermal treatment that is implemented in one furnace for forming of a given glass article, e.g. bended glass sheet, into another furnace for forming the same. At some extend, the method would also allow to emancipate from human skills and errors for that transfer or duplication.

Solution to problem

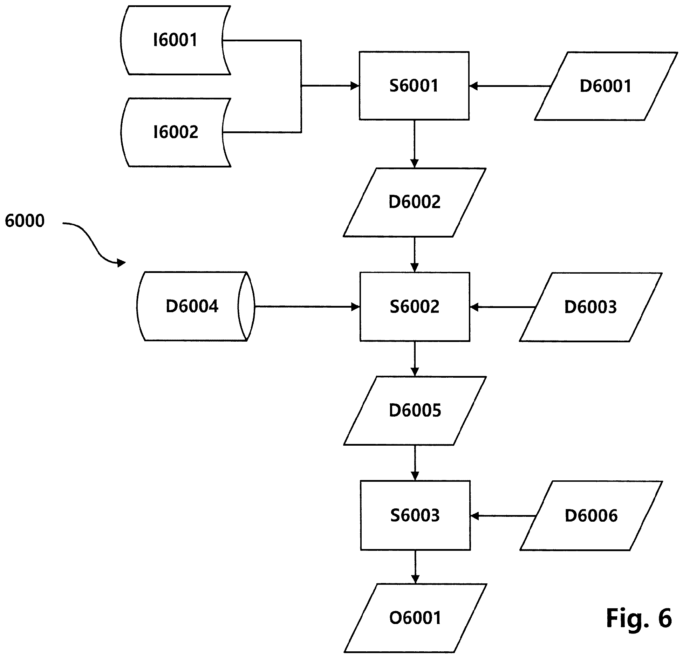

The present invention relates to a computer implemented method and a process as described in claims.
More precisely, with reference to fig. 6, there is provided computer implemented method 6000 for adjusting at least one parameter 06001 of glass forming furnace 1000 to form a given glass article 1004, said method comprising the following steps:

(a) computing S6001 heat transfers D6002 in a first glass forming furnace with a first physical model D6001 from at least one parameter 16001 of a said first furnace, and thermal properties 16002 of the glass article 1004 produced in said furnace;
(b) computing S6002 heat transfers D6005 in a second glass forming furnace with a mathematical model D6003 from the heat transfers D2002 computed at step (a) and the heat transfers history D6004 of said second glass forming furnace;
(c) computing S6003 at least one parameter 06001 of the said second glass furnace with a second physical model D6006 from the heat transfers D6005 of the second glass forming furnace computed at step (b).

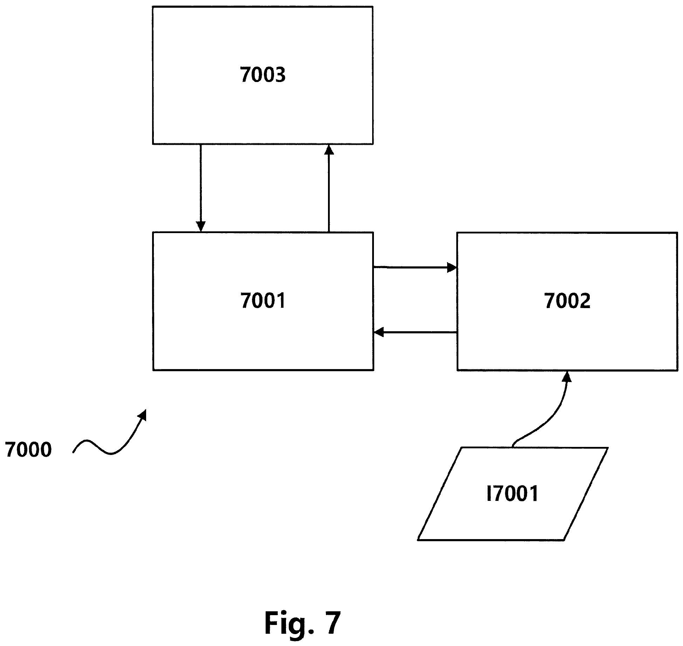

In the scope of the invention, heat transfers relate to the generation and exchange of thermal energy, i.e. heat, between components of the furnace (e.g. heating elements, bottom, crown or ceiling, side-walls), the glass articles being formed in that furnace and any other component that may be used as tool or tooling (e.g. mould, glass support) to form that glass article. Heat transfers may occur from thermal conduction, thermal convection, thermal radiation and thermal advection inside the furnace.
An outstanding advantage of the invention is that it allows to reproduce, transfer or duplicate a thermal treatment that is implemented in one furnace for forming of a given glass article, into another furnace for forming the same. It allows to reuse a set of adjusted parameters for a 'heating recipe' or 'heating program' that work in a first furnace to a second furnace while limiting, even eliminating, any human based heuristic approach, and related human errors.
According to some embodiments described below, the invention may also help to facilitate or simplify the physical modelling of the heat transfers in the first and second glass forming furnace at steps (a) and step (c) as some, in particular complex, heat transfer mechanisms can be advantageously disregarded in the physical model thanks to the mathematical model at step (b) that allow to offset them.
According to another aspect of the invention, with reference to fig. 7, there is provided a data processing system 7000, a computer program 17001 and a computer readable medium 7002 comprising instructions to cause a computer to carry out a method according to the invention.

## Brief description of the drawings

Fig. 1 is a schematic 3D orthographic representation of a glass forming section of a glass forming furnace.
Fig. 2 is a cross-sectional view of the glass forming section of a glass forming furnace of the fig. 1.
Fig. 3 is a schematic diagram of a set of adjusted parameters for heating elements in a first furnace.
Fig. 4 depicts schematic heat maps corresponding to the diagram of set of parameters of fig. 2.
Fig. 5 is a schematic diagram of a set of adjusted parameters for heating elements in a second furnace corresponding to the heat maps of fig. 4.
Fig. 6 is a logical data flow diagram of the computer implemented method according to the invention.
Fig. 7 is a physical data flow diagram of a processing data system.

## Description of embodiments

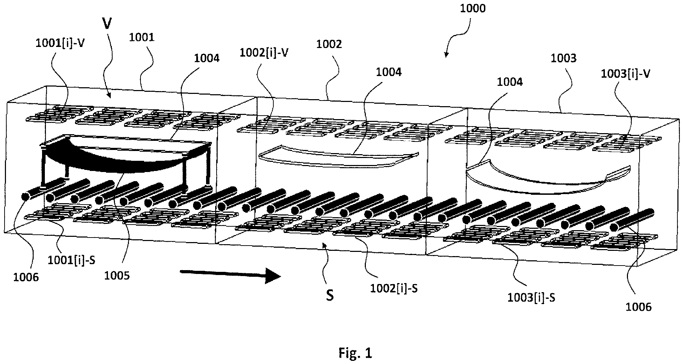

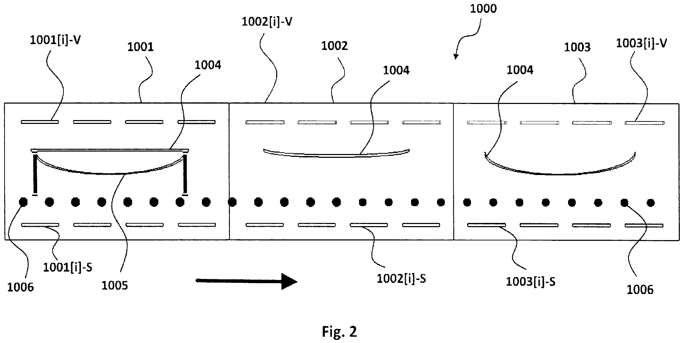

Fig. 1 and fig. 2 depict a common schematic representation of glass forming section of a glass forming furnace, in particular a sag-bending glass furnace. The furnace comprises a pre-forming section (not represented), a glass forming section 1000 which comprises a succession of heating chambers 1001, 1002, 1003 and a post-forming section (not represented). A glass sheet 1004 is conveyed on a support 1005 (only represented for the first chamber 1001), called a tooling, trough the chambers 1001, 1002 and 1003 by a conveyor 1006. In sag-bending process, the tooling 1005 usually comprises a frame which supports the of the glass sheet at its edges, and may include convex surface onto which the glass sheet 'sags' by gravity under the effect of its own mass upon heating in the glass forming section 1000. In press-bending process, the tooling 1005 often further comprises a second concave surface which is complementary of the first convex surface, and presses the glass sheet onto the convex surface upon heating in the glass forming chamber 1002. Tooling are common in glass bending industry and well described in the prior art, for instance JP2005179124A, JP2014105121A, EP1550639A1, EP0613864A1, EP1836137A1, and EP0652185A2.

As explained above, the thermal treatment, i.e. heating conditions, heating recipe or program, used to heat the glass during the forming stage in the glass forming section 1000 is a critical step. The heating environment in glass forming section 1000 has to be precisely adjusted so that heat transfers that occur in the section allow to form, i.e. to shape, the glass. In this scope, the glass forming section 1000 comprises a succession of heating chambers 1001, 1002, 1003. Each chamber comprises several heating elements that are placed at the crown / vault V and at the sole S of the furnace. The heating elements 1001[i]-V, 1002[i]-V, 1003[i]-V (i=1... n) at the vault V are above the conveyed glass sheet 1004. The heating elements 1001[i]-S, 1002[i]-S, 1003[i]-S (i=1... n) at the sole S of the furnace are below the conveyed glass sheet 1004.

For sake of clarity, only limited number of chambers and heating elements are represented on fig. 1 and 2. Common furnaces comprise many more chamber and heating elements. In particular, the glass forming section 1000 can comprise 3 to 20 chambers, each comprising up to 200 heating elements, and even more.

The heating elements are often more or less independent from each other allowing to finely and precisely distribute the heat that surrounds the glass sheet in the chamber. For instance, they may be independently powered and/or be placed at different locations from one chamber to another, and/or from the vault to the sole of a same chamber, in order to get different spatial distributions of levels of radiation while the glass sheet 1004 is conveyed through the glass forming section 1000.

To adjust the heat transfers occurring in the furnace, in particular in the glass forming section 1000, the furnace may also comprise fans that help to control the level of heat flowing through the furnace by regulating the air flow.

Beside these parameters, other parameters such as the temperature cycle of the furnace, the conveying speed of the glass sheet and the spatial location, i.e. the spatial coordinates of glass sheet in the coordinate system of the furnace, the thermal properties of the glass article itself may influence the heat transfers occurring in between the furnace, the glass sheet and, eventually the tooling.

In practice, all these parameters are manually adjusted by a skilled operator through a human based heuristic approach. However, because of the heating history and configuration of glass furnaces vary from one to another, the reuse, transfer or duplication, of a set of adjusted parameters that work for a given furnace for manufacturing a given glass article to another furnace for forming the same glass article is not a straightforward operation.

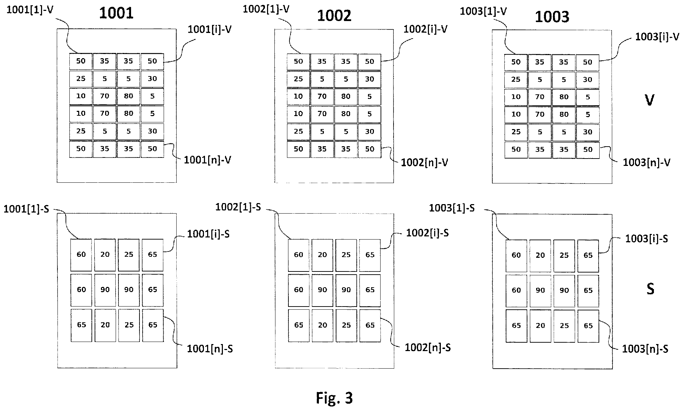

As an illustrative example, fig. 3 is a schematic diagram of the spatial location or arrangement of heating elements (represented by rectangles) at the vault V (first row) and at the sole S (second row) of the three heating chambers 1001, 1002, 1003 of the glass forming section 1001 of a first glass forming furnace as illustrated on fig. 1 and 2. The number and spatial location of the heating elements represented on fig. 3 are different from those of fig. 1 et 2.

In the fig. 3, the number in each rectangle representing a heating element corresponds to the level of power (in percentages) supplied to said heating element, so that each heating element radiates differently from each other in order to finely and precisely distribute the heat onto the glass sheet. 1004. These numbers form a set of adjusted parameters corresponding to a heating 'recipe' or program to obtain the required thermal treatment or heating conditions for forming of the glass sheet 1004 into a given shape.

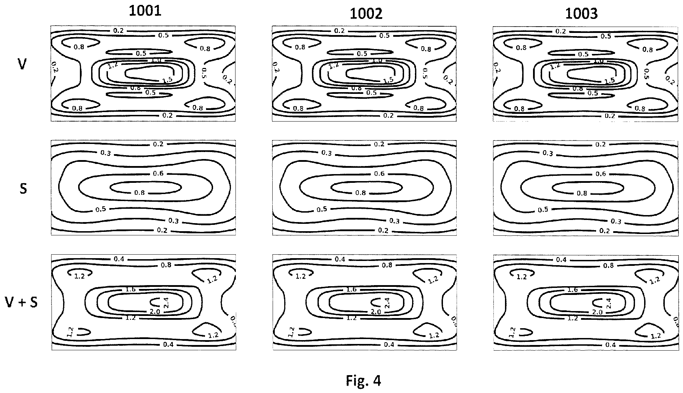

Fig. 4 depicts schematic heat maps in level lines ($J/mm^2$) at the vault V (fist row), at the sole S (second row) and the sum S+V thereof (third row) according to the diagram of set of parameters of fig. 3. for each heating chambers 1001, 1002, 1003 of the glass forming section 1000. The sums S+V of the heat maps (third row) illustrate the heat conditions as experienced by the glass sheet 1004, and are a more concrete, i.e. real or physical, representation of the heating 'recipe' or 'program' represented on fig. 3. This kind of heat maps can be modelled with various physical models of heat radiation, as discussed later on.

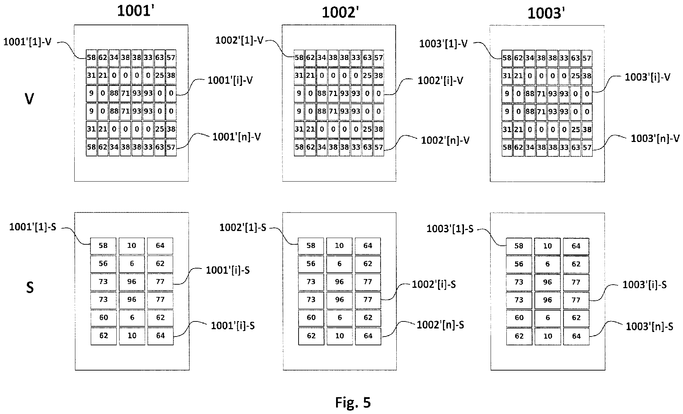

Fig. 5 is a schematic diagram of set of adjusted parameters for heating elements of the glass forming section of a second furnace. The number in each rectangle representing a heating element corresponds to the level of power (in percentages) supplied to said heating element. On the figure, the heating elements at the vault V (1001'[i]-V, 1002'[i]-V, 1003'[i]-V; i=1...n) and at the sole S (1001'[i]-S, 1002'[i]-S, 1003'[i]-V; i=1..n) of three heating chambers 1001', 1002', 1003' of said second furnace are represented, but the second furnace can comprise more heating chambers.

On the figure, the number and the arrangement of the heating elements are different from those of the fig. 3. Their characteristics, and those of other components of the furnace as well, can also be different from those of the furnace corresponding to fig. 3. Therefore, in order to obtain the same heat maps as represented on fig. 4, parameters of the heating elements have to be adjusted differently from those of the fig. 3, as it is illustrated on the fig. 5.

As explained above, the reuse, transfer or duplication, of a set of adjusted parameters that work for a given furnace, i.e. a first furnace, for manufacturing a given glass article to another furnace, i.e. a second furnace, for forming the same glass article is not a straightforward operation, and often requires a human based heuristic approach for adjustment. It is an objective of the invention to provide a solution to this problem.

With reference to fig. 6, there is provided a computer implemented method 6000 for adjusting at least one parameter 06001 of glass forming furnace to form a given glass article 1004, said method comprising the following steps:

> (a) computing S6001 heat transfers D6002 in a first glass forming furnace with a first physical model D6001 from at least one parameter 16001 of a said first furnace, and thermal properties 16002 of the glass article 1004 produced in said furnace;
> (b) computing S6002 heat transfers D6005 in a second glass forming furnace with a mathematical model D6003 from the heat transfers D6002 computed at step (a) and the heat transfers history D6004 of said second glass forming furnace;
> (c) computing S6003 at least one parameter 06001 of the said second glass furnace with a second physical model D6006 from the heat transfers D6005 of the second glass forming furnace computed at step (b).

As explained above, heat transfers occurring in a furnace may be adjusted through many parameters depending of its characteristics. Thus, according to embodiments of the invention, the at least one parameter of first or second glass forming furnace may be the power of heating elements, the spatial location of the heating elements in the furnaces, the temperature inside the furnaces, the pressure of fans, the temperature cycle in the furnaces, the conveying speed of glass, or the spatial location of the glass article in the furnace.

The at least one parameter of the first furnace may be the same as, or different from, the at least one parameter of the second glass forming furnace. Further, the number of parameters of the first glass furnace may also equal, or different from, the number of parameters of the second glass forming furnace. For instance, the at least one parameter of the first glass forming furnace can be the power of the heating elements of said first furnace, and the at least one parameter of the second glass forming furnace may be the power and/or spatial location of the heating elements of said second furnace. In most cases, the kind and number of parameters are the same for the first glass forming furnace and the second glass forming furnace.

Within the framework of the invention, the mathematical model can be regarded as a transfer function allowing to map the heat transfers of the first glass forming furnace with the heat transfers of the second glass forming furnace.

In embodiments of the invention, the mathematical model D6003 of step (b) may be advantageously a supervised or unsupervised machine learning algorithm trained on the heat transfer histories of the first and second glass forming furnaces for different sets of parameters applied to the first and second glass forming furnaces. In this scope, different sets of same parameters may be applied to the first and second glass forming furnaces and, the heat transfer histories of both furnaces be recorded accordingly. The algorithm may then be trained on the histories provided as training data where the heat transfer history of the second furnace is selected as targets and the heat transfer history of the first furnace is selected as features. Additionally, or alternatively, when heat transfers histories are available for the first and second glass forming furnaces in which similar glass articles were formed, these histories can be advantageously used as a set of training data for the algorithm.

Various supervised or unsupervised machine learning based regression analysis or classification may be used to compute the mathematical model D6003. For example, it may be a Ridge regression, a Random Forest regression, a decision tree regression, a gradient boosting regression, or a neural network based regression analysis. Many programming and software resources or modules are available in the prior art. For example, if all or part of the method according to invention is computer implement in Python programming language, Scikit-learn, Keras or TensorFlow modules provide useful and ready to use API for machine learning algorithms.

One way to assess the reliability of the data on which a machine learning based regression analysis is trained or the reliability of the said trained algorithm itself is to evaluate the performances of the training with adapted mathematical tools. The art provides many mathematical tools to carry out such evaluation. Also, models of machine learning regression analysis are often packaged with adapted mathematical tools to evaluate their performances.

In embodiment of the invention, the mathematical model of step (b) may be a functional and/or structural data mapping between a first database, or a first data warehouse, comprising heat transfers history of the first glass forming furnace and a second database, or data warehouse, comprising heat transfers history of the second glass forming history, so that relationships are created between data corresponding to or functionally implicated to similar heating environments or conditions in both furnaces. The mapping may be manually and/or automatically done. Machine learning based regression analysis or classification may be advantageously used in performing the mapping.

Many physical models are available in the art to compute heat transfers in a furnace from one or several parameters of that furnace, and vice-versa. It is beyond the scope of this application to discuss these models in details as large amount of documentation is available in the art, for instance Bergman et al., Fundamentals of heat and mass transfers, Wiley, 2011.

Briefly, these models usually rely on different theoretical and/or empirical modelling of the fundamental mechanisms or modes of heat transfers: radiation, convection, conduction and/or advection. the first physical model D6001 of step (a) and the second physical model D6006 of step (c) may be one these available models.

A simple physical model, that can be rightly used as such or used as a basis for further development wherein another modes of heat transfer are modelled, is a radiation model that computes the heat radiated by the heating elements of a furnace onto the surface of a glass article.

As an illustrative example, for a glass forming furnace as depicted in fig. 1, radiation emitted by the heating elements in a cell of the glass forming chamber can be modelled with the following equation, for which the at least one parameter of the furnace can be the power or current supplied to the heating element.

$$L_n(P, S) = \int_{t=0}^{T} \sum_{i_{HE} \in n} \frac{P(i_{HE}) * \Omega(i_{HE}, S, t)}{A(S)} \qquad \text{Eq. 1}$$

Where $L_n$ is the heat, expressed in J/m$^2$, radiated by the heating elements, *HT,* of a cell, *n,* of the glass forming chamber; $i_{HE}$ represents a heating element, *HT,* of the cell, *n*; P, the radiated heat, expressed in Joules, by the heating element $i_{HE}$ in the cell *n,* and is function of the supplied power or current of heating element; A is the area of the surface, *S,* of the glass article; $\Omega$ is a view factor corresponding to the amount of radiation received, i.e. absorbed, by the surface, *S,* of the glass article, from the heating element, $i_{HE}$, for a time *t*; and *T* is the exposition time of the surface, *S,* of the glass article to the radiation of the heating elements, and that is correlated to the conveying speed of the glass article in the cell, n.

The view factor, $\Omega$, depends on the thermal properties of the glass article and the spatial localisation of the heating elements in the cell.

According to some embodiments of the invention, the first and second physical models D6001, D6003 may be limited to radiation models, such as the one described above. Surprisingly, thanks to the mathematical model of step (b), complex heat transfer mechanisms, i.e. convection, conduction and/or advection phenomena, occurring in the first and second glass forming furnaces can be disregarded and the physical modelling of the heat transfers in the first and second glass forming furnace at steps (a) and step (c) is advantageously simplified. Such embodiments are particularly well adapted for most glass forming furnace, such sag- or press-bending furnaces.

Within the framework of the invention, the first and second physical models of steps (a) and (c) can be respectively regarded as a direct function and an inverse function that link heat transfers occurring in a furnace with at least one parameter of that furnace, and reversely. Hence, according to some advantageous embodiments of the invention, the second physical model D6006 of step (c) is an inverse function of the first physical model D6001 of step (a). Such an inverse function can be obtained through common mathematical optimization methods, wherein a cost or loss function is minimized to find optimal parameters. Many programming and software resources or modules are available in the prior art for mathematical optimization. For example, if all or part of the method according to invention is computer implement in Python programming language, the Sequential Least SQuares Programming or Dual Annealing functions of the scipy-optimize module may be used. A genetic algorithm may also be used as well.

As an example, supposing a first physical model based on a radiation model as formulated with the equation Eq. 1 discussed above in which the at least one parameter of the first furnace is the power or current supplied to the heating elements, an inverse function for the second physical can be expressed with the following equation.

$$\underset{P(i_{HE})}{\text{argmin}} \, C\big(P(i_{HE})\big) = \underset{P(i_{HE})}{\text{argmin}} \sum_{s \in S} \big( \sum_{n \in F_1} L_n(s) - \sum_{n \in F_2} L_n^{target}(s, P(i_{HE}))^2 \qquad \text{Eq. 2}$$

Where *C* is the loss or cost function; $L_n$ is the heat, expressed in J/m$^2$, radiated by the heating elements, *HT,* of a cell, *n,* of the glass forming chamber of the first furnace, $F_1$, as computed with Eq. 1; $L_n^{target}$ is the heat, expressed in J/m$^2$, radiated by the heating elements, *HT,* of cell, n, of the glass forming chamber of the second furnace, $F_2$, expressed with the Eq. 1 and in which $P(i_{HE})$ is the variable to be optimized for the second furnace $F_2$ ; s is a discrete infinitesimal surface element of the surface, *S,* of the glass article to produce in the second furnace, $F_2$. In the cost function C, $P(i_{HE})$

is the variable to optimize in order to minimize the cost function, *C.* As $P(i_{HE})$ is related to the power or current supplied to the heating element in the second furnace, said power or current corresponds to the at least one parameter of the second furnace, $F_2$.

Using a cost function may have two advantages. First, it may allow to find a solution to the equation 2 that complies with some specifications, e.g. specifications from tools, devices and/or machines that are in use in cells of the glass forming chambers of the second furnace. Second, the cost function may be designed so that it mathematically implements some practical/technical skills of operators, e.g. rules regarding the power distribution among the heating elements.

The tooling 1005 that supports the glass article 1004, i.e. glass sheet, and participates in the forming of the glass article may play an important role in heat transfers occurring between the furnace and the glass article 1005. Depending on the thermal properties of the tooling 1005, which in turn depends on its characteristics and features, such as its material and/or the geometrical arrangement of its frame, the level of influence of said tooling on heat transfers may be quite significant not to disregard it while computing, or modelling, of heat transfers.

The tooling 1005 may be the same or different from one furnace to another. Its material, the geometrical arrangement of its frame and/or the way in which the glass article is in contact with its supporting parts at the start or during the forming, can be quite different from one furnace to another. Thus, it may be advantageous to consider or take into account the thermal properties of the tooling in the heat transfers.

In this context, according to embodiment of the invention, the heat transfers of step (a) may be further computed with said first physical model D6001 from the thermal properties of the glass forming tooling of said first glass forming furnace and/or the heat transfers of step (c) are further computed with said second physical model D6006 from the thermal properties of the glass forming tooling of said second glass forming furnace.

The method 6000 of the invention is computer implemented. According to another aspect of the invention, there is provided a data processing system 7000 comprising means for carrying out the method 6000 according to any of the embodiments described herein. Example of means for carrying out the method is a device 7001 which can be instructed to carry out sequences of arithmetic or logical operations automatically to perform tasks or actions. Such device, also called computer, can comprise one or more Central Processing Unit (CPU) and at least a controller device that are adapted to perform those operations. It can further comprise other electronic components like input/output interfaces 7003, non-volatile or volatile storages devices 7003, and buses that are communication systems for the data transfer between components inside a computer, or between computers. One of the input/output devices can be user interface for human-machine interaction, for example graphical user interface to display human understandable information.

Another object of the invention is to provide a computer program 17001 comprising instructions which, when the program is executed by a computer, cause the computer to carry out the method of the invention according to any embodiments described herein.

Any kind of programming language, either compiled or interpreted, can be used to implement the steps of the method of the invention. The computer program can be part of a software solution, i.e. part of a collection of executable instructions, code, scripts or the like and/or databases.

Another object of the invention is to provide a computer-readable medium 7002 comprising instructions which, when executed by a computer, cause the computer to carry out the method according to any of the embodiments described herein.

The computer-readable medium 7002 is preferably a non-volatile storage or memory, for example hard disk drive or solid-state drive. The computer-readable storage can be removable storage media or a non-removable storage media as part of a computer.

Alternatively, the computer-readable medium may be a volatile memory inside a removable media. This can ease the deployment of the invention into many production sites.

The computer-readable storage 7002 can be part of a computer used as a server from which executable instructions can be downloaded and, when they are executed by a computer, cause the computer to carry out a method according to any of the embodiments described herein.

Alternatively, the instructions can be executed on the server to which client computers can connect and provide data as inputs to the method of the invention. Once data are processed, the output can be downloaded onto the client computer or directly send, for example, as instructions to adjust parameters of the second glass forming furnace. This kind of implementation can be advantageous as it can be realised in a distributed computing environment such as a cloud computing solution.

The method 6000 according to the invention is well adapted for a use in a glass forming process, in particular in a glass sag-bending or press-bending process. In particular, the method 6000 according to the invention is adapted for a use in glass forming process of laminated glass or glazing, such as windshields, or tempered glass or glazing.

It is to be understood that the embodiments described herein are the most preferred embodiments to describe the invention. These embodiments can be combined unless their respective functions appear incompatible for such combination.

It is to be further understood that the invention is not limited to the disclosed embodiments. It is intended to cover equivalent arrangements included within the scope of the claims.

**Claims**

1. A computer implemented method (6000) for adjusting at least one parameter (06001) of glass forming furnace to form a given glass article (1004), said method comprising the following steps:

   (a) computing (S6001) heat transfers (D6002) in a first glass forming furnace with a first physical model (D6001) from at least one parameter (16001) of a said first furnace, and thermal properties (16002) of the glass article (1004) produced in said furnace;
   (b) computing (S6002) heat transfers (D6005) in a second glass forming furnace with a mathematical model (D6003) from the heat transfers (D6002) computed at step (a) and the heat transfers history (D6004) of said second glass forming furnace;
   (c) computing (S6003) at least one parameter (06001) of the said second glass furnace with a second physical model (D6006) from the heat transfers (D6005) of the second glass forming furnace computed at step (b).

2. Method (6000) according to claim 1, wherein the mathematical model (D6003) of step (b) is a supervised or unsupervised machine learning algorithm trained on the heat transfers history of the first and second glass forming furnaces for different sets of parameters applied to the first and second glass forming furnaces.

3. Method (6000) according to any of claims 1 to 2, wherein the mathematical model (D6003) of step (b) is a supervised or unsupervised machine learning algorithm trained on the heat transfers history of the first and second glass forming furnaces in which similar glass articles were formed.

4. Method (6000) according to any of claims 1 to 3, wherein the heat transfers of step (a) are further computed with said first physical model (D6001) from the thermal properties of the glass forming tooling (1005) of said first glass forming furnace.

5. Method (6000) according to any of claims 1 to 4, wherein the heat transfers of step (c) are further computed with said second physical model from the thermal properties of the glass forming tooling (1005) of said second glass forming furnace.

6. Method (6000) according to any of claims 1 to 5, wherein the at least one parameter of first or second glass forming furnace is the power of heating elements, the spatial location of the heating elements in the furnaces, the temperature inside the furnaces, the pressure of fans, the temperature cycle in the furnaces, the conveying speed of glass, or the spatial location of the glass article in the furnace.

7. Method according to any of claims 1 to 6, wherein the second physical model (D6006) of step (c) is an inverse function of the first physical model (D6001) of step (a).

8. Method (6000) according to ant of claims 1 to 7, wherein the first and second physical models (D6001, D6006) are radiation, convection, conduction and/or advection models of the first and second glass forming furnaces respectively.

9. Method (6000) according to any of claims 1 to 8, wherein the first and second physical models (D6001, D6003) are radiation models.

10. A data processing system (7000) comprising means for carrying out a method (6000) according to any one of the claims 1 to 9.

11. A computer program (17001) comprising instructions which, when executed by a computer, cause the computer to carry out a method (6000) according to any one of the claims 1 to 9.

12. Use of method (6000) according to any of claims 1 to 10 in a glass forming process, in particular in a glass sag-bending or press-bending process.

Fig. 1

Fig. 2

**1001**

1001[1]-V

1001[i]-V

| 50 | 35 | 35 | 50 |
| 25 | 5 | 5 | 30 |
| 10 | 70 | 80 | 5 |
| 10 | 70 | 80 | 5 |
| 25 | 5 | 5 | 30 |
| 50 | 35 | 35 | 50 |

1001[n]-V

**1002**

1002[1]-V

1002[i]-V

| 50 | 35 | 35 | 50 |
| 25 | 5 | 5 | 30 |
| 10 | 70 | 80 | 5 |
| 10 | 70 | 80 | 5 |
| 25 | 5 | 5 | 30 |
| 50 | 35 | 35 | 50 |

1002[n]-V

**1003**

1003[1]-V

1003[i]-V

| 50 | 35 | 35 | 50 |
| 25 | 5 | 5 | 30 |
| 10 | 70 | 80 | 5 |
| 10 | 70 | 80 | 5 |
| 25 | 5 | 5 | 30 |
| 50 | 35 | 35 | 50 |

V

1003[n]-V

1001[1]-S

1001[i]-S

| 60 | 20 | 25 | 65 |
| 60 | 90 | 90 | 65 |
| 65 | 20 | 25 | 65 |

1001[n]-S

1002[1]-S

1002[i]-S

| 60 | 20 | 25 | 65 |
| 60 | 90 | 90 | 65 |
| 65 | 20 | 25 | 65 |

1002[n]-S

1003[1]-S

1003[i]-S

| 60 | 20 | 25 | 65 |
| 60 | 90 | 90 | 65 |
| 65 | 20 | 25 | 65 |

S

1003[n]-S

Fig. 3

11

Fig. 4

Fig. 5

I6001

I6002

S6001

D6001

D6002

6000

D6004

S6002

D6003

D6005

S6003

D6006

O6001

Fig. 6

**Fig. 7**

Europäisches
Patentamt

European
Patent Office

Office européen
des brevets

# EUROPEAN SEARCH REPORT

Application Number

EP 20 31 5324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/125588 A1 (KLADIAS NIKOLAOS P [US] ET AL) 23 May 2013 (2013-05-23) * paragraph [0059]; figures 1,4 * ----- | 1-12 | INV. G05B15/02 G05B13/02 G05B17/02 G05D23/19 C03B23/023 |
| | | | TECHNICAL FIELDS SEARCHED (IPC) |
| | | | G05B G05D C03B |

The present search report has been drawn up for all claims

| Place of search | Date of completion of the search | Examiner |
|---|---|---|
| The Hague | 30 October 2020 | Salvador, Didier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 31 5324

30-10-2020

| Patent document cited in search report | Publication date | Patent family member(s) | Publication date |
|---|---|---|---|
| US 2013125588 A1 | 23-05-2013 | CN 104428262 A | 18-03-2015 |
| | | JP 6212495 B2 | 11-10-2017 |
| | | JP 2015513308 A | 07-05-2015 |
| | | KR 20140139479 A | 05-12-2014 |
| | | TW 201326065 A | 01-07-2013 |
| | | US 2013125588 A1 | 23-05-2013 |
| | | US 2014305167 A1 | 16-10-2014 |
| | | WO 2013078037 A1 | 30-05-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020002195 A1
- CN 104843981 A
- JP 2005179124 A
- JP 2014105121 A
- EP 1550639 A1
- EP 0613864 A1
- EP 1836137 A1
- EP 0652185 A2

**Non-patent literature cited in the description**

- **BERGMAN et al.** Fundamentals of heat and mass transfers. Wiley, 2011